(19) Europäisches Patentamt
European Patent Office
Office européen des brevets

(11) Publication number: **0 288 253 A2**

# (12) EUROPEAN PATENT APPLICATION

(21) Application number: 88303540.4

(22) Date of filing: 20.04.88

(51) Int. Cl.4: C08K 5/34 , C08L 67/02 , C08L 77/00 , C08L 79/08

(30) Priority: 24.04.87 JP 101467/87

(43) Date of publication of application: 26.10.88 Bulletin 88/43

(84) Designated Contracting States: AT BE CH DE ES FR GB GR IT LI LU NL SE

(71) Applicant: POLYPLASTICS CO. LTD.
30, Azuchimachi 2-chome
Higashi-ku Osaka-shi Osaka(JP)

(72) Inventor: Nakane, Toshio
885-11, Miyajima
Fuji-shi Shizuoka(JP)
Inventor: Hijikata, Kenji
8-8, Fujimidai
Mishima-shi Shizuoka(JP)
Inventor: Kageyama, Yukihiko
815, Gendojicho
Fuji-shi Shizuoka(JP)
Inventor: Naka, Michiro
52, Morishita
Fuji-shi Shizuoka(JP)

(74) Representative: Jackson, Peter et al
HYDE, HEIDE & O'DONNELL 146 Buckingham Palace Road
London SW1W 9TR(GB)

## (54) Resin compositions.

(57) A resin composition being improved in impact resistance comprises a polymer having a carboxylic acid radical in a polymer chain and, in mixture therewith, a bislactam compound expressed by the following general formula (A):

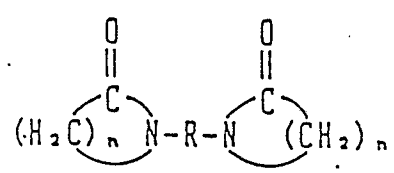

(A)

(in which R represents a bivalent organic radical; a hydrogen atom may be substituted by an alkyl or aryl radical; n is an integer of 2 - 8.)

EP 0 288 253 A2

## Resin Compositions

(Field of Industrial Application)

This invention relates to resin compositions having improved impact resistance and, more particularly, to resin compositions incorporating an additive which is less liable to property deterioration due to thermal history and which can provide flexibility and upgrade the degree of polymerization of the matrix polymer.

(Prior Art and its Problems)

Among polymers of the type which has a carboxylic acid radical in a polymer chain there are many useful polymers represented by polyester, polyamide-, and vinyl-based unsaturated carboxylic acid copolymers. More particularly, heat-resistant polyesters and polyamides have recently been largely used as engineering plastics. Since these heat resistant resins have high melting points, the process of producing or molding such resin is carried out at especially high temperatures, and naturally in such high-temperature atmosphere there will concurrently occur thermal decomposition reaction. In order to improve enginerring plastics in various properties required of them, including mechanical properties, such as impact resistance, in particular, it is extremely important to upgrade the degree of polymerization of their constituent polymers, or not to lower such degree.

To this end there have been made various attempts for improvement. For example, in order to upgrade the initial polymerization degree for the polymer itself assuming that the polymer is subject to some degree of thermal decomposition, it is known to employ the ester interchange technique, or to use an activated polycondensation agent. However, these approaches require that a compound which serves for ester exchange or activation is distilled away from the system, for which purpose the apparatus must be brought under reduced pressure. This naturally results in increased cost of production. Further, such approach is not so convenient.

It is also known to add various stabilizers to prevent possible downward changes in polymerization degree due to thermal history and any resulting deterioration in mechanical properties. Such approach is widely employed because it is simple and provides some improvements. However, such approach has limitations in that it cannot provide any long-term stability; therefore, such attempt has not been successful in providing materials having long-term performance reliability.

Further, crystalline polymers represented by polyesters and polyamides are hard per se and not flexible enough. In addition, they are liable to become even less flexible due to thermal history. Attempts have been made to overcome such difficulty by aading various different types of elastomers and plasticizers, but the trouble is that such material does not provide any good interfacial contact with the polymer, which fact often leads to interfacial separation, property deterioration, and/or bleeding as a cause of surface deterioration. Another problem is that such admixture does not serve to prevent possible quality deterioration of the matrix polymer; therefore it does not provide any substantial improvement.

(Means for Solving the Problems)

In view of the above mentioned difficulties, the present inventors made a series of studies directed for development of a simple compounding technique effective for preventing possible property deterioration of polymers due to thermal history, stabilizing their mechanical properties on a long-term basis, and also providing them with improved impact resistance, and as a result they found that certain compounds could exhibit excellent performance for provision of the desired improvements. This led to the present invention.

This invention is based on a simple technique such that a low molecular weight compound, such as a bislactam compound, is compounded with a polymer having a carboxylic acid radical. It is very useful and

very surprising indeed to solve aforesaid problems by such simple approach.

This invention provides a resin composition having improved impact resistance, comprising a polymer having a carboxylic acid radical in a polymer chain and, in mixture therewith, a bislactam compound expressed by the following general formula (A):

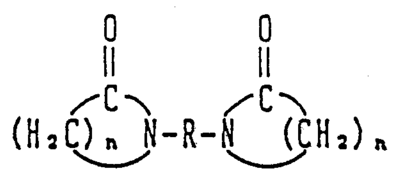

(A)

For the polymer having a carboxylic acid radical in a polymer chain, the following are exemplified as such: polymers produced by condensation polymerization of compounds having a carboxylic acid in a monomer, namely, condensation polymers, such as polyesters, polyamides, polyamide acid, polyimides, and polyester amides; polymers produced by additive polymerization of unsaturated polymerizable compounds having carboxylic acids, namely, monopolymers, such as polyacrylic acid and polymetacrylic acid; copolymers of unsaturated carboxylic acids, such as acrylic, methacrylic, maleic, fumaric, and itaconic acids, with ethylene and/or α-olefin; and polymers having an unsaturated carboxylic acid modifiedly added to a polymer chain terminal and/or a polymer chain.

The carboxylic acid radical may be contained in the form of a carboxylic acid precursor like such compound as acid anhydride, ester, amide, imide, lactone, or lactam. Of these polymers, highly rigid polymers are advantageously used in the practice of the invention; preferably condensation polymers, more preferably saturated polymers, are used. Any saturated polyester is preferably such that more than 80 mol % of its dicarboxylic acid constituent is an aromatic dicarboxylic acid. For such saturated polyester, aromatic polyester and/or polyalkylene terephthalate are preferred, and an alkylene terephthalate polymer having 2 - 4 carbon atoms is especially preferred. More particularly, a tetramethylene terephthalate having 4 carbon atoms is less resistant to fracture transmitted by any fine crack at a moment of impact, as compared with a polyethylene terephthalate having 2 carbon atoms; in other words, it has greater notch sensitivity. Therefore, it exhibits an exceedingly great modification effect for the purpose of the invention wherein a bislactam compound is used for incorporation as an ingredient.

Examples of monomers used in these condensation polymers are polybasic aliphatic and aromatic acids, such as terephthalic acid, isophthalic acid, naphthalene dicarboxylic acid, adipic acid, sebacic acid, trimellitic acid, and succinic acid, or their ester-forming derivatives; and aromatic hydroxy carboxylic acids, such as hydroxy benzoic acid and hydroxy naphthoic acid, or their ester-forming derivatives.

Condensation monomers corresponding to these carboxylic acids, are, as well known, compounds such as alcohols, amines, and thiols. Of these compounds, preferred alcohol compounds useful for saturated polyesters are exemplified as follows: glycols, such as ethylene glycol, 1, 3-propane diol, 1, 4-butadiene diol, 1, 4-butene diol, 1, 6-hexane diol, 1, 8-octane diol, 3-methyl-1,5-pentane diol, 3, 3′-dimethyl-1, 3-propane diol, 1, 4-dimethylol cyclohexane, and tricyclodecane dimethylol; polyalkylene glycols, such as polyethylene glycol, polypropylene glycol, polybutylene glycol, and polyethylene/propylene glycols; polyoxyalkylene glycols, such as polyethylene oxide glycol and polybutylene oxide glycol; aromatic alcohols, such as bisphenol-A, bisphenol-S, 4,4′-dihydroxy bisphenyl, hydroquinone, and dihydroxy naphthalene, and halogen compounds thereof, also ethylene oxides of such aromatic alcohols; diol, 1, 4-dimethylol cyclohexane, and tricyclodecane dimethylol; polyalkylene glycols, such as polyethylene glycol, polypropylene glycol, polybutylene glycol, and polyethylene/propylene glycols; polyoxyalkylene glycols, such as polyehtylene oxide glycol and polybutylene oxide glycol; aromatic alcohols, such as bisphenol-A, bisphenol-S, 4, 4′-dihydroxy biphenyl, hydroquinone, and dihydroxy naphthalene, and halogen compounds thereof, also ethylene oxides of such aromatic alcohols; and polyhydroxy compounds, such as propylene oxide adduct, glycerine, and pentaerythritol, and their ester-forming derivatives; Such alcohol ingredients may be used in one kind alone, or in a combination of two or more kinds.

The bislactam compound used in the practice of the invention is expressed by the following general formula (A):

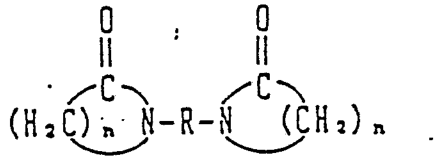 (A)

(in which R represents a bivalent organic radical; a hydrogen atom may be substituted by an alkyl or aryl radical; n is an integer of 2 - 8.)

For R, a compound expressed by the following formula (B) or (C) is preferred.

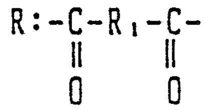 (B)

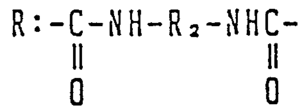 (C)

(in which $R_1$, $R_2$, each represents an organic radical.)

For such compound, one in which $R_1$ or $R_2$ is an organic radical containing at least one aromatic ring is preferred.

Formula (B) represents a dicarboxylic acid residue. Typical examples are terephthalic acid, isophthalic acid, naphthalene dicarboxylic acid, adipic acid, sebasic acid, trimellitic acid, and succinic acid. Of these, terephthalic acid, isophthalic acid, and naphthalene dicarboxylic acid are preferred. These compounds can be prepared in the corresponding usual ways. For example, one simple way is that their respective acid chloride compounds are reacted with lactams.

Formula (C) represents a urea bond, which can be introduced in various ways. One simple way is that isocyanate is caused to react with lactams. For this purpose, any conventional diisocyanate can be used. Concrete examples of such bond are toluene diisocyanate, methylene diphenyl diisocyanate, xylene diisocyanate, naphthylene diisocyanate, 3, 3′-dimethyl phenyl-4, 4′-diisocyanate, isophorone diisocyanate, hydrogenated methylene biphenyl diisocyanate, hydrogenated toluene diisocyanate, lysin diisocyanate, and bis(2-isocyanate ethyl) fumarate.

Of these, methylene diphenyl diisocyanate, xylene diisocyanate, isophorone diisocyanate, and hexamethylene diisocyanate.

For useful lactams, those having 2 - 8 methylens are preferred, and more specifically those having 3 - 5 methylens, such as pyrrolidone, piperidone, and caprolactam, are especially preferred.

The bislactam expressed by the formula (A), its pre-compounding state, contains an adduct produced by reaction with a reactive compound having an active hydrogen, such as carboxylic acid, alcohol, and thiol, and can be prepared by causing a bislactam compound with a compound having at least two or more active hydrogen groups. In this way, a low molecular weight compound can be turned out into a high molecular weight compound in the form of a terminal lactam type adduct. Such bislactam compound may be compounded with the polymer in any suitable proportion according to the intended purpose. A usual range of proportions of such compound is 0.01 - 200 parts by weight, preferably 0.1 - 100 parts by weight, per 100 parts by weight of the polymer having a carboxylic acid radical.

The resin compositions according to the invention may incorporate various kinds of additives known to skilled persons in the art, according to the intended purpose.

Examples of such additives are stabilizers, such as antioxidants and ultraviolet absorbers, antistatic agents, flame retardants, flame retarding auxiliaries, colorants, such as dyes and pigments, and lubricants, lubricating agents, crystallization accelerators (nucleating agents), and inorganic materials for provision of improved flowability and releasability.

Examples of useful inorganic materials are ordinary-type inorganic fibers, such as glass fibers, carbon fiber, metallic fiber, ceramic fiber, boron fiber, potassium titanate fiber, and asbestos, powdery and granular materials, such as calcium carbonate, highly dispersible silicate, alumina, aluminum hydroxide, talc, clay, mica, antimony trioxide, halogenated antimony, magnesium hydroxide, glass flakes, glass powder, glass beads, quartz powder, silica sand, wollustonite, various kinds of metallic powders, carbon black, barium sulfate, plaster of Paris, silicon carbide, alumina, boron nitride, and silicon nitride, lamellar inorganic

compounds, and whiskers. These inorganic fillers may be used in one kind alone or in a combination of two or more kinds.

Further, in order to provide improved melt-extrusion coatability, lubricating properties, flexibility, etc., one or more kinds of organic polymeric materials may be used for mixture or copolymerization. Examples of such materials are other skeletal polyesters, polyamides, carboxylic acid-modified olefins, and their copolymers; polyolefins and polyacrylates, such as polyethylene, polypropylene, and polybutene; modified polyolefins, such as ABS and the like; engineering plastics, such as polycarbonate, polyphenylene oxide, polyphenylene sulfide, and fluoroplastics; and rubber-like elastic polymers, such as polyurethane, butyl rubber, ethylenepropylene rubber, and various kinds of elastomers.

The bislactam compound can be incorporated in the stage of polymer polymerization, or in the stage of pellet preparation employing an extruding machine, or in the stage of polymer molding employing an extruding, injection molding, or compression molding machine. Especially in the stage of extruding or molding operation employing the extruding or molding machine such compound can be most efficiently incorporated, since good blend effect can be obtained by a mixing and agitating operation for a short length of time, e.g., less than 10 minutes. In this case, a more than 10 minutes-long mixing and agitating operation may cause a trouble of coloration due to the decomposition of the bislactam depending upon the type of the resin. The bislactam compound may be incorporated by being compounded with the polymer in the stage of polymer melting, or by being compounded with a powder-form or pellet-form polymer prior to polymer melting. It is also possible to coat the bislactam compound on the surface of the polymer by using a solvent. When such coating is made, it is desirable to heat the composite to at least 100°C or more. In order to further accelerate the effect of compounding, it is effective to add an accelerater, such as class-4 phosphinic salt.

(Advantages of the Invention)

The resin compositions according to the inventions have the following advantages:

(1) Incorporation of a very small amount of the bislactam compound can provide improved impact resistance. Since no such large-amount addition as is seen in the case of elastomer loading is involved, the rigidity of the matrix resin is not affected in any unfavorable way.

(2) Possible deterioration due to thermal history in tensile elongation and impact resistance can be prevented. Since the resin compositions have excellent long-term stability characteristics, they can be advantageously used under heating conditions at locations adjacent a source of heat.

(3) An initial degree of polymerization for the polymer need not be previously upgraded. Therefore, good moldability can be provided without melt-stage flowability being affected in any way.

(4) The bislactam compound may be incorporated at any stage, that is, at the polymerization stage for the polymer, or at the stage of molding. Good improvement effect can be obtained only by the compound being mixed with the polymer under melt, and thus resin compositions having excellent performance characteristics can be easily produced.

(Examples)

The invention will be explained in further detail by giving the following examples. It is understood, however, that the invention is not limited by these examples.

Examples 1 and 2

1.5 parts by weight of isophthaloyl biscaprolactam was mixed in powder form with 98.5 parts by weight of polybutylene terephthalate (PBT) or 98.5 parts by weight of polyethylene terephthalate (PET), whichever may be the cases, and the mixture was melt-compounded in an extruder so that a mean detention time in the extruder was 3 minutes. Thus, pellets were obtained. By employing an injection molding machine, test pieces were prepared from the pellets in the usual way. The test pieces were evaluated as to their properties.

Property evaluations were made in the following manner. For tensile strength and tensile elongation, measurements were made according to ASTM D 638, and for izod impact strength, measurements were made according to ASTM D 256. Also, the moldings were examined in respect of coloration degree. The results are shown in Table 1. After similar test pieces were treated in a constant temperature bath at 150°C for 500 hours, similar series of property measurements were made again. The results are shown in Table 1.

Examples 3 - 5

In same way as in Example 1, test specimens were prepared from an aromatic polyester (PAR) consisting of terephthalic acid, isophthalic acid, and bisphenol A, a liquid crystalline polyester (LCP) consisting of hydroxy benzoic acid and hydroxy naphthoic acid, and a nylon 66 consisting of adipic acid and hexamethylene diamine, respectively. The test pieces were evaluated as to their properties. The results are shown in Table 1.

Comparative Examples 1 - 5

Test pieces prepared from the respective polymers used in Examples 1 - 5 and without compounding the isophthaloyl biscaprolactam were evaluated as to their properties in same manner as in Example 1. The results are shown in Table 1.

Examples 6 - 10

Test pieces prepared with individual compositions shown in Table 2 were evaluated as to their properties in same manner as in Example 1. However, it is to be noted that pellets were prepared by melt compounding in such a way that a mean detention time in the extruder was 8 minutes.

Comparative Examples 6 and 7

Polybutylene terephthalate and polyethylene terephthalate were respectively evaluated as to their properties in same manner as in Examples 6 - 10. The results are shown in Table 2.

Table 1

| | | Example | | | | | Comparative Example | | | | |
|---|---|---|---|---|---|---|---|---|---|---|---|
| | | 1 | 2 | 3 | 4 | 5 | 1 | 2 | 3 | 4 | 5 |
| Composition | Resin (wt.parts) | PBT (98.5) | PET (98.5) | PAR (98.5) | LCP (98.5) | nylon 66 98.5) | PBT (100) | PET (100) | PAR (100) | LCP (100) | nylon 66 (100) |
| | Bislactam (wt parts) | isophthaloyl biscaprolactam (1.5 | same as left shown (1.5) | same as left shown (1.5) | same as left shown (1.5) | same as left shown (1.5) | - | - | - | - | - |
| Izod impact strength (notched) kg·cm/cm | | 12 | 9 | 22 | 51 | 10 | 3.5 | 4.5 | 18 | 44 | 4.0 |
| Tensile strength $kg/cm^2$ | | 530 | 575 | 720 | 2070 | 845 | 530 | 570 | 715 | 2100 | 840 |
| Tensile elongation (%) | | 330 | 230 | 70 | 5 | 75 | 320 | 220 | 55 | 3.0 | 60 |
| Molding coloration | | none | colored slight | none | none | none | none | none | none | none | none |
| After heat treatment* | Izod impact strength (notched) kg·cm/cm | 9.5 | 6.7 | 20.0 | 51 | 8.0 | 2.6 | 3.3 | 13.0 | 44 | 3.0 |
| | Tensile strength $kg/cm^2$ | 550 | 582 | 725 | 2080 | 855 | 740 | 690 | 740 | 2105 | 890 |
| | Tensile elongation (%) | 250 | 104 | 60 | 5 | 58 | 49 | 39 | 34 | 3 | 32 |

* 150°C, 500 hour

Table 2

| | | Example | | | | | Comparative Example | |
|---|---|---|---|---|---|---|---|---|
| | | 6 | 7 | 8 | 9 | 10 | 6 | 7 |
| Composition | Resin (wt parts) | PBT (98.5) | PET (98.5) | PBT (98.5) | PBT (98.5) | PBT (98.5) | PBT (100) | PET (100) |
| | Bislactam (wt parts) | isophthaloyl bispyloridone (1.5) | isophthaloyl biscaprolactam (1.5) | isophthaloyl bispyloridone (1.5) | isophthaloyl biscaprolactam (1.5) | diphenylmethane bis(4,4'-carbomoyl caprolactam) (1.5) | PBT | PBT |
| Izod impact strength (notched) kg·cm/cm | | 11.0 | 8.5 | 13.5 | 12.0 | 8.5 | 3.5 | 4.0 |
| Tensile strength $kg/cm^2$ | | 530 | 570 | 520 | 530 | 545 | 530 | 565 |
| Tensile elongation (%) | | 330 | 215 | 335 | 325 | 320 | 315 | 210 |
| Molding coloration | | none | colored slight | none | none | none | none | none |

## Claims

1. A resin composition having improved impact resistance, comprising a polymer having a carboxylic acid radical in a polymer chain and, in mixture therewith, a bislactam compound expressed by the following general formula (A):

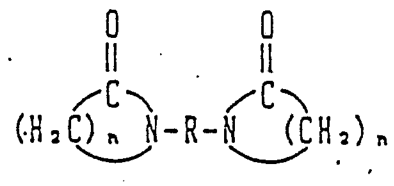

(A)

(in which R represents a bivalent organic radical; a hydrogen atom may be substituted by an alkyl or aryl radical; n is an integer of 2 - 8.)

2. A resin composition as set forth in Claim 1 wherein the amount of the bislactam compound is 0.01 - 200 parts by weight per 100 parts by weight of the polymer.

3. A resin composition as set forth in Claim 1 wherein the polymer having a carboxylic acid radical in a polymer chain is polyester, polyamide, a polyamide acid, polyimide, or polyester amide.

4. A resin composition as set forth in Claim 1 wherein the polymer having a carboxylic acid radical in a polymer chain is a saturated polyester.

5. A resin composition as set forth in Claim 4 wherein the saturated polyester is such that more than 80 mol % of its dicarboxylic acid constituents is aromatic dicarboxylic acid.

6. A resin composition as set forth in Claim 4 wherein the saturated polyester is an aromatic polyester and/or polyalkylene terephthalate.

7. A resin composition as set forth in Claim 4 wherein the saturated polyester is an alkylene terephthalate polymer having 2 or 4 carbon atoms.

8. A resin composition as set forth in Claim 4 wherein the saturated polyester is a tetramethylene terephthalate having 4 carbon atoms.

9. A resin composition as set forth in Claim 1 wherein R in the formula (A) represents a compound expressed by the following general formula (B) or (C):

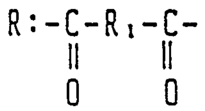

(B)

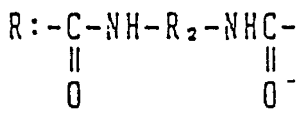

(C)

(in which $R_1$, $R_2$, each represents an organic radical.)

10. A resin composition as set forth in Claim 9 wherein $R_1$ or $R_2$ in the formula (B) or (C), as the case may be, is an organic radical containing at least one aromatic ring.